# FASCICULE DE BREVET EUROPEEN

(11) **EP 2 228 252 B1**
(45) Date de publication et mention de la délivrance du brevet: **10.10.2012**
(21) Numéro de dépôt: 10290120.4
(22) Date de dépôt: 10.03.2010
(51) Int. Cl.: B62D 1/18, B60N 2/16, B60N 2/24

(54) **Poste de pilotage de véhicule comprenant une struture élévatrice du siège du pilote et des moyens d'orientation du volant**
Cockpit eines Fahrzeugs, das über eine Struktur zur Höhenverstellung des Pilotensitzes und Mittel zur Lenkradverstellung verfügt
Vehicle driving seat including a structure for raising the seat of the driver and means for positioning the steering wheel

(30) Priorité: 11.03.2009 FR 0901199
(43) Date de publication de la demande: 15.09.2010
(73) Titulaire: NEXTER Systems, 42328 Roanne Cedex (FR)
(72) Inventeur: Martinez, Yves, 18023 Bourges Cedex (FR)
(74) Mandataire: Célanie, Christian

(56) Documents cités:
- EP-A- 1 361 104
- DE-A1- 2 307 183
- FR-A- 2 450 733

## Description

Le domaine technique de l'invention est celui des postes de pilotage pour véhicules dans lequel le siège du pilote est solidaire d'une structure élévatrice.

De tels postes de pilotage sont particulièrement mis en oeuvre dans les véhicules blindés car ils permettent au pilote d'avoir au moins deux positions de pilotage, une position tête sortie hors de l'habitacle du véhicule et une position à l'abri à l'intérieur du véhicule.

Le brevet EP-1361104 décrit un tel poste de pilotage dans lequel le siège est solidaire d'un bras monté pivotant sur la caisse du véhicule. Afin de conserver une certaine ergonomie pour le pilotage dans les deux positions extrêmes du siège, le volant est fixé à un support qui est lui aussi monté pivotant sur une articulation solidaire de la caisse. Une biellette d'entraînement fait pivoter le support de volant lors du pivotement du bras. Ainsi, lorsque le pilote adopte une position de conduite tête sortie, l'orientation angulaire du volant se rapproche de l'horizontale et on évite ainsi de coincer le pilote avec le volant.

Un tel poste de pilotage présente des inconvénients. En effet, l'amplitude de déplacement en hauteur du siège est relativement réduite. Si on cherche à accroître cette amplitude, l'inclinaison du siège devient excessive ce qui nuit au confort de conduite.

Pour accroître la course sans incliner le siège on a donc cherché à remplacer un tel bras pivotant par une nacelle montée sur un quadrilatère déformable. Cependant il n'est plus possible alors de mettre en oeuvre un support de volant pivotant par rapport à la caisse car le pivotement de ce support présente un point de rebroussement qui conduit à des interférences entre le volant et le pilote.

L'invention a pour but de proposer un poste de pilotage permettant de fournir une course verticale importante pour le pilote tout en assurant une ergonomie de conduite dans toutes les positions du poste.

Ainsi, l'invention a pour objet un poste de pilotage d'un véhicule dans lequel le siège du pilote est solidaire d'une structure élévatrice qui est mobile par rapport à la caisse du véhicule par l'action d'un moyen moteur entre une position basse dans laquelle le pilote est complètement à l'intérieur du véhicule et une position haute dans laquelle le pilote est tête sortie, poste de pilotage comprenant un volant dont l'orientation spatiale est modifiée par des moyens d'orientation lorsque la structure élévatrice est déplacée, poste de pilotage **caractérisé en ce que** la structure élévatrice comprend une nacelle solidaire d'un premier quadrilatère déformable comprenant au moins deux bras articulés d'une part sur la nacelle et d'autre part sur la caisse, le volant étant lui-même solidaire de moyens d'orientation qui comprennent un deuxième quadrilatère déformable comprenant une bielle inférieure et une bielle supérieure qui sont articulées sur un support de volant, la bielle inférieure étant déplacée en translation par une biellette d'entraînement elle-même articulée sur le premier quadrilatère déformable, la bielle inférieure étant par ailleurs guidée en translation par rapport à la caisse par un premier moyen de guidage, le deuxième quadrilatère déformable comprenant également une bielle de commande de pivotement, articulée sur les bielles inférieure et supérieure, et qui coopère au niveau de son extrémité reliée à la bielle supérieure avec un deuxième moyen de guidage solidaire de la caisse, l'orientation et la géométrie du deuxième moyen de guidage étant telles que la translation de l'extrémité inférieure de la bielle de commande de pivotement entraîne le pivotement de l'extrémité supérieure de ladite bielle de commande de pivotement.

Selon un mode particulier de réalisation, le premier moyen de guidage est constitué par une première rainure droite, solidaire de la caisse et inclinée par rapport à la verticale, la bielle inférieure comportant un prolongement qui porte deux patins de guidage qui circulent dans cette première rainure.

La biellette d'entraînement et la bielle de commande de pivotement pourront être articulées sur la bielle inférieure au niveau d'un même sommet inférieur du deuxième quadrilatère déformable, sommet inférieur au niveau duquel sera également disposé un patin de guidage dans la première rainure.

Le deuxième moyen de guidage pourra être constitué par une deuxième rainure droite formant un angle avec la première rainure, le sommet de l'angle étant dirigé vers le volant.

Selon un autre mode de réalisation, le deuxième moyen de guidage pourra être constitué par au moins une rainure courbe, la convexité de la courbe étant orientée vers le volant.

Le moyen moteur pourra comprendre un vérin qui sera fixé entre une articulation fixe solidaire de la caisse et une articulation solidaire d'une barre du premier parallélogramme déformable.

Selon une variante, le moyen moteur pourra comprendre un vérin qui sera fixé entre une articulation fixe solidaire de la caisse et une articulation solidaire de la nacelle.

L'invention sera mieux comprise à la lecture de la description qui va suivre de modes particuliers de réalisation, description faite en référence aux dessins annexés et dans lesquels :
- la figure 1 est une vue latérale schématique d'une caisse de véhicule équipée d'un poste de pilotage selon un mode de réalisation de l'invention,
- les figures 2a et 2b sont deux vues agrandies des moyens de guidage du deuxième quadrilatère déformable, ces vues étant symétriques l'une de l'autre par rapport à un plan passant par les rainures de guidage (le vérin est retiré sur ces figures),
- les figures 3a et 3b montrent le poste de pilotage respectivement dans ses positions basse et haute,
- la figure 4 montre le moyen de guidage seul,
- les figures 5 et 6 montrent deux autres modes de réalisation des moyens de guidage.

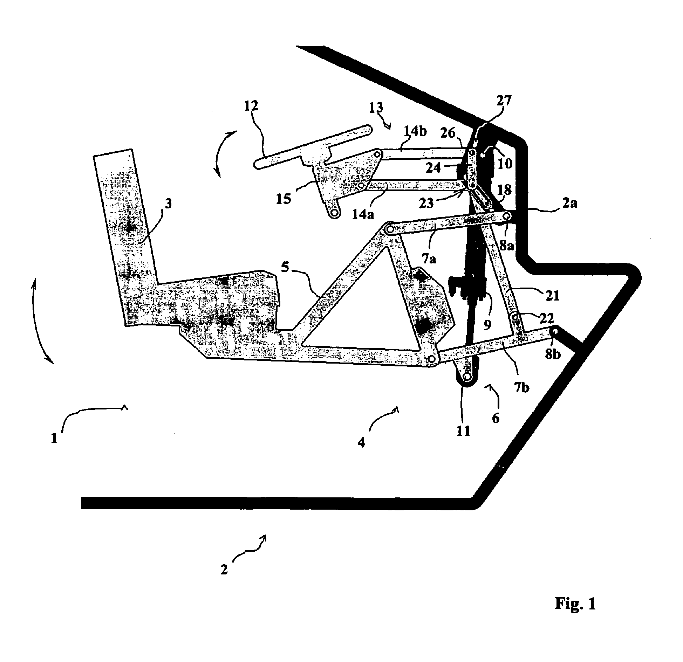

La figure 1 montre un poste de pilotage 1 d'un véhicule 2 dans lequel le siège 3 du pilote est solidaire d'une structure élévatrice 4 qui est mobile par rapport à la caisse 2a du véhicule.

Cette structure élévatrice 4 comprend une nacelle 5 qui est solidaire d'un premier quadrilatère déformable 6 comprenant au moins deux bras 7a et 7b articulés d'une part sur la nacelle 5 et d'autre part sur la caisse 2a au niveau de deux articulations 8a et 8b.

La représentation donnée ici est bien entendu très schématique. La nacelle 5 pourra en particulier être supportée par deux paires de bras 7a,7b articulés sur la caisse par deux paires d'articulations 8a, 8b.

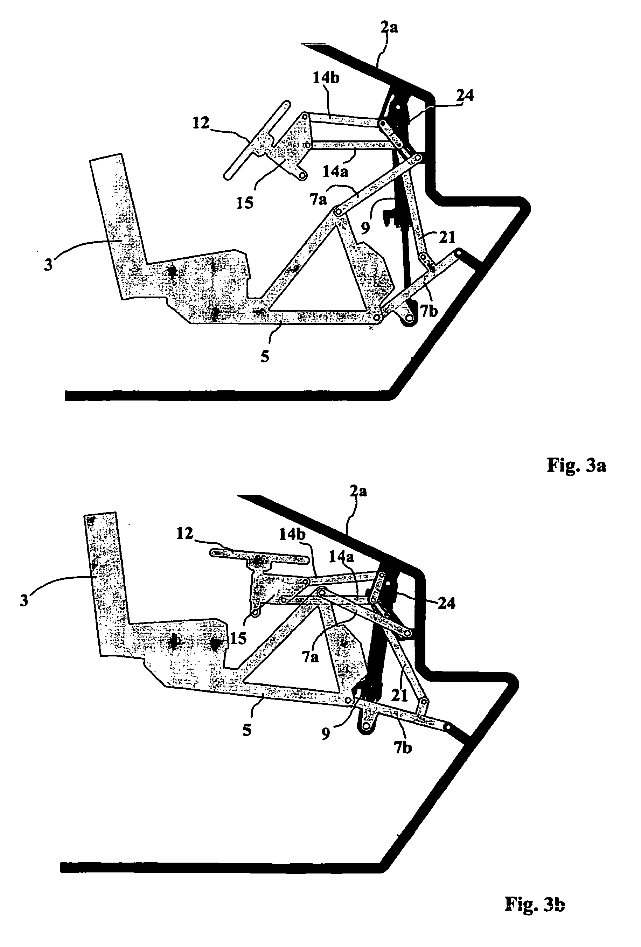

La nacelle 5 est déplacée de sa position basse (figure 3a) à sa position haute (figure 3b) à l'aide d'un moyen moteur 9 qui est constitué par un vérin (électrique ou hydraulique).

Dans la position basse (figure 3a) de la nacelle 5, le pilote se trouve complètement à l'intérieur du véhicule 2. Dans la position haute (figure 3b) de la nacelle, le pilote a sa tête sortie au travers d'une ouverture (non représentée).

Le vérin 9 est monté entre une articulation 10 fixée à la caisse 2a et une autre articulation 11 solidaire de la barre inférieure 7b du premier quadrilatère déformable 6. Au lieu d'être fixé à la barre inférieure 7b, le vérin pourrait être fixé à la barre supérieure 7a ou bien directement sur la nacelle 5, cela en fonction des contraintes d'intégration dans le véhicule.

On remarque sur les figures 3a et 3b que le recours à un quadrilatère déformable permet de donner à la nacelle 5 portant le siège 3 une trajectoire dans laquelle le siège 3 ne pivote pratiquement pas par rapport à un plan horizontal. D'une façon classique, le mouvement sera une translation circulaire (sans rotation du siège) lorsque le quadrilatère déformable 6 est un parallélogramme (longueurs des bras identiques deux à deux et parallèles). Une légère rotation spatiale du siège interviendra lorsque le quadrilatère déformable 6 n'est pas un parallélogramme (au moins deux bras non parallèles). L'Homme du Métier définira les longueurs des bras du quadrilatère déformable en fonction de la trajectoire souhaitée et des contraintes d'intégration de la nacelle dans le véhicule.

Le poste de pilotage 1 comprend par ailleurs un volant 12 dont l'orientation spatiale est modifiée par des moyens d'orientation 13 lorsque la structure élévatrice 4 est déplacée. Les moyens d'orientation du volant comprennent un deuxième quadrilatère déformable formé d'une bielle inférieure 14a et d'une bielle supérieure 14b qui sont articulées sur un support 15 du volant 12.

Bien entendu le volant 12, qui est monté pivotant par rapport au support 15, est raccordé à un mécanisme de direction qui ne fait pas partie de la présente invention et qui n'est donc pas représenté ici. Ce mécanisme comprendra des tiges de liaison coulissantes et des joints de type CARDAN pour accompagner le déplacement de la nacelle.

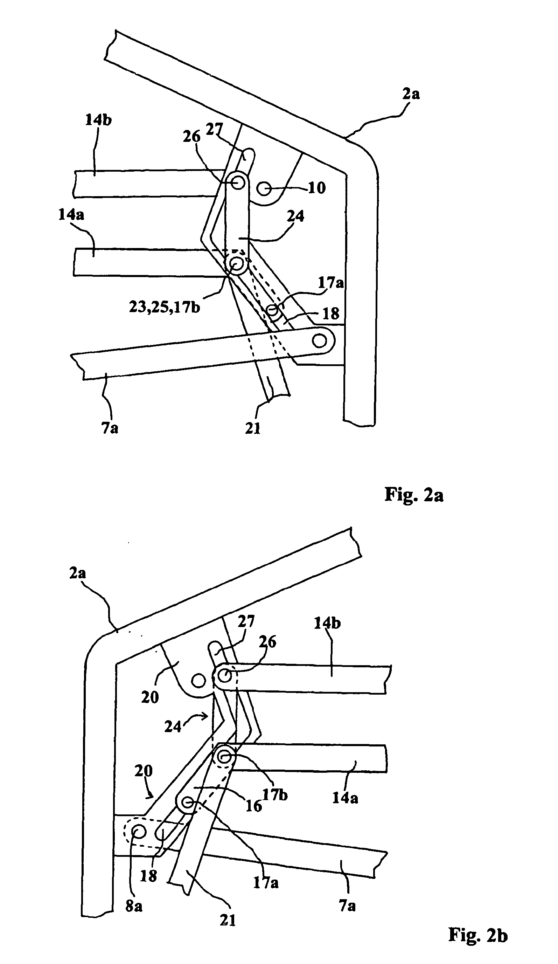

Comme cela est plus particulièrement visible sur la figure 2b, la bielle inférieure 14a comporte un prolongement 16 qui forme un angle avec la bielle 14a. Ce prolongement porte deux patins de guidage 17a et 17b qui circulent dans une première rainure 18 solidaire de la caisse 2a. Ainsi la bielle inférieure 14a est guidée en translation par rapport à la caisse 2a par la première rainure 18 qui constitue un premier moyen de guidage. La bielle inférieure 14a ne peut donc pas pivoter par rapport à la caisse 2a mais uniquement se translater verticalement. La bielle inférieure 14a entraîne dans son mouvement de translation le support 15 de volant.

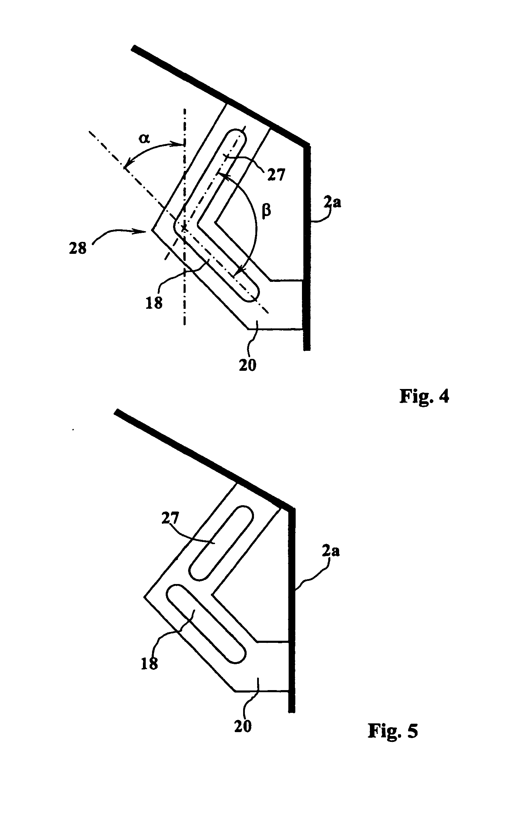

La première rainure 18 est une rainure droite qui forme un angle α avec la verticale 19 (figure 4). Pour des commodités de fabrication cette rainure 18 est aménagée dans un support 20 qui est rendu solidaire de la caisse 2a par des moyens de fixation (non représentés).

On remarque sur les figures 1, 2a et 2b que la bielle inférieure 14a est déplacée par une biellette d'entraînement 21 qui est articulée sur le premier quadrilatère déformable 6 au niveau d'une articulation 22 solidaire du bras inférieur 7b.

On remarque sur les figures que l'articulation 23 de la biellette 21 sur la bielle inférieure 14a se situe au même niveau que le patin de guidage 17b. Concrètement un même axe portera le patin 17b et un coussinet ou roulement constituant l'articulation 23. L'articulation 23 se situe ainsi au niveau d'un sommet géométrique inférieur du deuxième quadrilatère déformable 13.

Conformément à une autre caractéristique de l'invention, le deuxième quadrilatère déformable 13 comprend également une bielle 24 (dite bielle de commande de pivotement) qui est articulée sur les bielles inférieure 14a et supérieure 14b (articulations 25 et 26 respectivement - figure 2a).

Cette bielle de commande de pivotement 24 coopère au niveau de son extrémité 26 articulée à la bielle supérieure 14b avec un deuxième moyen de guidage 27 qui est solidaire de la caisse 2a du véhicule.

Le deuxième moyen de guidage est constitué par une deuxième rainure droite 27 qui forme un angle β avec la première rainure 18, le sommet 28 de l'angle (voir figure 4) étant dirigé vers le volant. Selon un mode particulier de réalisation (figure 4) cette deuxième rainure 27 est portée par le même support 20 solidaire de la caisse 2a.

Un moyen de guidage (tel un patin) est donc disposé au niveau d'un axe traversant cette deuxième rainure 27. Cet axe porte par ailleurs l'articulation 26 entre la bielle supérieure 14b et la bielle de commande de pivotement 24.

L'orientation du deuxième moyen de guidage 27 est telle que, lorsque l'extrémité inférieure 25 de la bielle de commande de pivotement 24 se translate (en suivant la bielle inférieure 14a guidée par la première rainure 18) l'extrémité supérieure 26 de ladite bielle de commande de pivotement est guidée par la rainure 28, et elle pivote donc en entraînant le pivotement du support de volant 15 par l'intermédiaire de la bielle supérieure 14b. Le pivotement de la bielle de commande 24 se fait par rapport à un axe perpendiculaire au plan de la figure 1 et passant par l'extrémité inférieure 25 de la bielle de commande 24 (cet axe de pivotement se translate avec l'extrémité 25).

On remarque sur les figures que la biellette d'entraînement 21 et la bielle de commande de pivotement 24 sont articulées sur la bielle inférieure 14a au niveau du même sommet inférieur 25 du deuxième quadrilatère déformable 13.

L'amplitude du pivotement obtenu pour le support de volant 15 dépendra de la valeur choisie pour l'angle β. Un angle β de 180° correspondant à une absence de rotation (les deux rainures sont dans le prolongement l'une de l'autre). Plus l'angle β est refermé (réduit) plus l'amplitude de la rotation du support 15 est forte pour une translation verticale donnée de la nacelle 5. Concrètement l'angle β sera cependant choisi suffisamment grand pour éviter tout blocage mécanique.

Les figures 3a et 3b montrent les positions de débattement extrêmes pour la nacelle 5. On voit que malgré l'amplitude importante de déplacement de la nacelle, le support 15 de volant accompagne ce déplacement en évitant tout coincement du pilote. Le volant 12 adopte en position haute (figure 3b) une position sensiblement horizontale et évite ainsi toute interférence avec les équipements potentiellement présents au niveau de la caisse 2a du véhicule.

On voit donc que, grâce à l'invention, on dissocie la commande en translation verticale du support de volant 15 de la commande en rotation dudit support.

C'est la bielle inférieure 14a qui matérialise la position verticale du support de volant 15 et qui constitue par ailleurs avec son prolongement 16 une console d'appui pour le support 15 de volant qui interdit tout basculement de ce dernier par l'effet de la gravité.

La translation du support de volant 15 est pilotée par l'inclinaison qui est donnée à la première rainure de guidage 18. Cette dernière permet de régler la part de translation horizontale et de translation verticale du support de volant 15 qui doit être associée au mouvement de la nacelle 5.

La commande en rotation du support de volant 15 est assurée par la bielle de commande de pivotement 24 dont l'extrémité supérieure suit la deuxième rainure 27 tandis que l'extrémité inférieure suit la bielle inférieure 14a.

Différentes variantes sont possibles sans sortir du cadre de l'invention. On a vu sur la figure 4 que les deux rainures 18 et 27 pouvaient être solidaires d'un seul et même support 20. Les rainures 18 et 27 se raccordent l'une à l'autre suivant ce mode de réalisation.

Il est possible de réaliser chaque rainure 18 et 27 dans un support mécanique différent.

Par ailleurs le deuxième quadrilatère déformable 13, qui a été représenté aux figures avec deux barres 14a et 14b situées dans le même plan, peut comporter deux autres barres parallèles aux précédentes (pour accroître la rigidité du montage suivant une direction perpendiculaire au plan de la figure). La deuxième rainure 27 peut alors se trouver dans un plan vertical parallèle au plan contenant la première rainure 18.

On a représenté à la figure 5 un autre mode de réalisation dans lequel les rainures 18 et 27 ne sont pas communicantes.

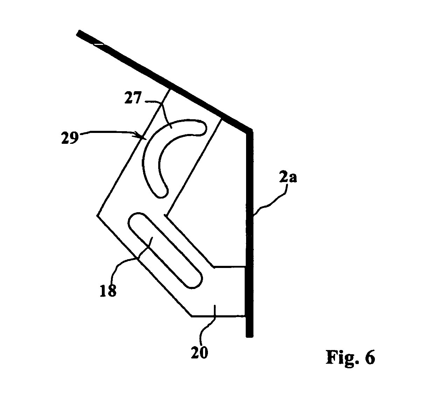

La figure 6 montre un autre mode de réalisation dans lequel la deuxième rainure 27 n'est pas droite mais courbe, la convexité 29 de la courbe étant orientée vers le volant (afin d'assurer un pivotement du support de volant dans le sens souhaité). Un tel mode de réalisation permet de donner au support de volant 15 un mouvement de pivotement particulier (en fonction des contraintes d'intégration dans un véhicule particulier).

## Revendications

1. Poste de pilotage (1) d'un véhicule (2) dans lequel le siège du pilote est solidaire d'une structure élévatrice (4) qui est mobile par rapport à la caisse du véhicule par l'action d'un moyen moteur (9) entre une position basse dans laquelle le pilote est complètement à l'intérieur du véhicule et une position haute dans laquelle le pilote est tête sortie, poste de pilotage comprenant un volant (12) dont l'orientation spatiale est modifiée par des moyens d'orientation (13) lorsque la structure élévatrice est déplacée, poste de pilotage ***caractérisé en ce que*** la structure élévatrice (4) comprend une nacelle (5) solidaire d'un premier quadrilatère déformable (6) comprenant au moins deux bras (7a, 7b) articulés d'une part sur la nacelle (5) et d'autre part sur la caisse (2a), le volant (12) étant lui-même solidaire de moyens d'orientation qui comprennent un deuxième quadrilatère déformable (13) comprenant une bielle inférieure (14a) et une bielle supérieure (14b) qui sont articulées sur un support (15) de volant, la bielle inférieure (14a) étant déplacée en translation par une biellette d'entraînement (21) elle-même articulée sur le premier quadrilatère déformable (6), la bielle inférieure (14a) étant par ailleurs guidée en translation par rapport à la caisse par un premier moyen de guidage (18), le deuxième quadrilatère déformable (13) comprenant également une bielle de commande de pivotement (24), articulée sur les bielles inférieure (14a) et supérieure (14b), et qui coopère au niveau de son extrémité reliée à la bielle supérieure avec un deuxième moyen de guidage (27) solidaire de la caisse (2a), l'orientation et la géométrie du deuxième moyen de guidage (27) étant telles que la translation de l'extrémité inférieure de la bielle de commande de pivotement (24) entraîne le pivotement de l'extrémité supérieure de ladite bielle de commande de pivotement.

2. Poste de pilotage selon la revendication 1, **caractérisé en ce que** le premier moyen de guidage est constitué par une première rainure droite (18), solidaire de la caisse (2a) et inclinée par rapport à la verticale, la bielle inférieure (14a) comportant un prolongement (16) qui porte deux patins de guidage (17a,17b) qui circulent dans cette première rainure (18).

3. Poste de pilotage selon la revendication 2, **caractérisé en ce que** la biellette d'entraînement (21) et la bielle de commande de pivotement (24) sont articulées sur la bielle inférieure (14a) au niveau d'un même sommet inférieur du deuxième quadrilatère déformable, sommet inférieur au niveau duquel est également disposé un patin de guidage (17b) dans la première rainure (18).

4. Poste de pilotage selon une des revendications 1 à 3, **caractérisé en ce que** le deuxième moyen de guidage est constitué par une deuxième rainure droite (27) formant un angle avec la première rainure (18), le sommet (28) de l'angle étant dirigé vers le volant.

5. Poste de pilotage selon une des revendications 1 à 3, **caractérisé en ce que** le deuxième moyen de guidage est constitué par au moins une rainure courbe (27), la convexité (29) de la courbe étant orientée vers le volant.

6. Poste de pilotage selon une des revendications 1 à 5, **caractérisé en ce que** le moyen moteur comprend un vérin (9) qui est fixé entre une articulation fixe (10) solidaire de la caisse (2a) et une articulation (11) solidaire d'une barre (7b) du premier parallélogramme déformable (6).

7. Poste de pilotage selon une des revendications 1 à 5, **caractérisé en ce que** le moyen moteur comprend un vérin (9) qui est fixé entre une articulation fixe solidaire de la caisse et une articulation solidaire de la nacelle (5).

## Claims

1. A driving post (1) for a vehicle (2) in which the driver's seat is integral with an elevating structure (4) that is able to move with respect to the vehicle body via the action of motor means (9) between a low position in which the driver is fully inside the vehicle and a high position in which the driver's head protrudes out of the vehicle, driving post comprising a steering wheel (12) whose spatial orientation is modified by orientation means (13) when the elevating structure is displaced, driving post *wherein* the elevating structure (4) comprises a pod (5) integral with a first deformable quadrilateral (6) comprising at least two arms (7a, 7b) articulated firstly on the pod (5) and secondly on the vehicle body (2a), the steering wheel (12) itself being integral with orientation means comprising a second deformable quadrilateral (13) comprising a lower connecting rod (14a) and an upper connecting rod (14b) articulated on a steering wheel support (15), the lower connecting rod (14a) being moved in translation by a drive rod (21) itself articulated on the first deformable quadrilateral (6), the lower connecting rod (14a) being further guided in translation with respect to the vehicle body by first guidance means (18), the second deformable quadrilateral (13) also comprising a pivoting control rod (24), articulated on the lower (14a) and upper (14b) connecting rods, and which cooperates at its end linked to the upper connecting rod with second guidance means (27) integral with the vehicle body (2a), the orientation and geometry of the second guidance means (27) being such that the translation of the lower end of the pivoting control rod (24) drives the pivoting of the upper end of said pivoting control rod.

2. A driving post according to Claim 1, wherein the first guidance means are constituted by a first straight groove (18) integral with the vehicle body (2a) and inclined with respect to the vertical, the lower connecting rod (14a) incorporating an extension (16) that carries two guide shoes (17a, 17b) sliding in this first groove (18).

3. A driving post according to Claim 2, wherein the drive rod (21) and the pivoting control rod (24) are articulated on the lower connecting rod (14a) at a same lower summit of the second deformable quadrilateral, lower summit at which a guide shoe (17b) is also positioned in the first groove (18).

4. A driving post according to one of Claims 1 to 3, wherein the second guiding means are constituted by a second straight groove (27) forming an angle with the first groove (18), the vertex (28) of the angle being oriented towards the steering wheel.

5. A driving post according to one of Claims 1 to 3, wherein the second guiding means are formed by at least one curved groove (27), the convexity (29) of the curve being oriented towards the steering wheel.

6. A driving post according to one of Claims 1 to 5, wherein the motor means comprise a cylinder (9) fastened between a fixed articulation (10) integral with the vehicle body (2a) and an articulation (11) integral with a bar (7b) of the first deformable parallelogram (6).

7. A driving post according to one of Claims 1 to 5, wherein the motor means comprise a cylinder (9) fastened between a fixed articulation integral with the vehicle body and an articulation integral with the pod (5).

## Patentansprüche

1. Cockpit (1) eines Fahrzeugs (2), bei dem der Sitz des Fahrers fest mit einer Hebe- und Senkstruktur (4) verbunden ist, welche in Bezug auf die Karosserie des Fahrzeugs durch die Einwirkung eines Antriebsmittels (9) zwischen einer niedrigen Position, in welcher sich der Fahrer vollständig im Inneren des Fahrzeugs befindet, und einer hohen Position, in welcher der Kopf des Fahrers herausragt, beweglich ist, wobei der Cockpit ein Lenkrad (12) umfasst, dessen räumliche Ausrichtung durch Ausrichtungsmittel (13) verändert wird, wenn die Hebe- und Senkstruktur verschoben wird, wobei der Cockpit ***dadurch gekennzeichnet ist, dass*** die Hebe- und Senkstruktur (4) ein fest mit einem ersten, verformbaren Viereck (6) verbundenes Gestell (5) umfasst, welches wenigstens zwei einerseits an das Gestell (5) und andererseits an die Karosserie (2a) angelenkte Arme (7a, 7b) umfasst, wobei das Lenkrad (12) selbst fest mit Ausrichtungsmitteln verbunden ist, welche ein zweites, verformbares Viereck (13) umfassen, welches eine untere Stange (14a) und eine obere Stange (14b) umfasst, die an einen Lenkradträger (15) angelenkt sind, wobei die untere Stange (14a) durch einen Antriebsschwingarm (21) in Translationsbewegung verschoben wird, welcher selbst an dem ersten, verformbaren Viereck (6) angelenkt ist, wobei die untere Stange (14a) außerdem in Bezug auf die Karosserie durch ein erstes Führungsmittel (18) in Translationsbewegung geführt wird, wobei das zweite, verformbare Viereck (13) auch eine Schwenksteuerstange (24) umfasst, die an der unteren (14a) und oberen (14b) Stange angelenkt ist, und die im Bereich ihres mit der oberen Stange verbundenen Endes mit einem zweiten, fest mit der Karosserie (2a) verbundenen Führungsmittel (27) zusammenwirkt, wobei die Ausrichtung und die Geometrie des zweiten Führungsmittels (27) derartig sind, dass die Translationsbewegung des unteren Endes der Schwenksteuerstange (24) das Schwenken des oberen Endes der genannten Schwenksteuerstange nach sich zieht

2. Cockpit nach Anspruch 1, **dadurch gekennzeichnet, dass** das erste Führungsmittel durch eine erste, gerade Nut (18) gebildet wird, die fest mit der Karosserie (2a) verbunden ist und in Bezug auf die Senkrechte geneigt ist, wobei die untere Stange (14a) eine Verlängerung (16) umfasst, welche zwei Führungskufen (17a, 17b) trägt, welche sich in dieser ersten Nut (18) bewegen.

3. Cockpit nach Anspruch 2, **dadurch gekennzeichnet, dass** der Antriebsschwingarm (21) und die Schwenksteuerstange (24) an die untere Stange (14a) im Bereich eines selben unteren Scheitelpunktes des zweiten, verformbaren Vierecks angelenkt sind, wobei im Bereich des unteren Scheitelpunktes ebenfalls eine Führungskufe (17b) in der ersten Nut (18) angeordnet ist.

4. Cockpit nach einem der Ansprüche 1 bis 3, **dadurch gekennzeichnet, dass** das zweite Führungsmittel von einer zweiten, geraden Nut (27) gebildet wird, die einen Winkel mit der ersten Nut (18) einschließt, wobei der Scheitelpunkt (18) des Winkels zum Lenkrad geführt ist.

5. Cockpit nach einem der Ansprüche 1 bis 3, **dadurch gekennzeichnet, dass** das zweite Führungsmittel durch wenigstens eine gekrümmte Nut (27) gebildet wird, wobei die Wölbung (29) der Krümmung zum Lenkrad hin ausgerichtet ist.

6. Cockpit nach einem der Ansprüche 1 bis 5, **dadurch gekennzeichnet, dass** das Antriebsmittel einen Zylinder (9) umfasst, der zwischen einem festen, mit der Karosserie (2a) verbundenen Gelenk (10) und einem fest mit einem Stab (7b) des ersten, verformbaren Parallelogramms (6) verbundenen Gelenk (11) befestigt ist.

7. Cockpit nach einem der Ansprüche 1 bis 5, **dadurch gekennzeichnet, dass** das Antriebsmittel einen Zylinder (9) umfasst, der zwischen einem festen, fest mit der Karosserie verbundenen Gelenk und einem fest mit dem Gestell (5) verbundenen Gelenk befestigt ist.
